# FASCICULE DE BREVET EUROPEEN

(11) **EP 4 226 112 B1**
(45) Date de publication et mention de la délivrance du brevet: **28.01.2026**
(21) Numéro de dépôt: 21799090.2
(22) Date de dépôt: 07.10.2021
(51) Int. Cl.: F28F 9/02, F28D 9/00, F02C 7/141, F28F 1/02, F28D 21/00

(54) **ÉCHANGEUR DE CHALEUR EN CONTRE-COURANT POUR TURBOMACHINE, TURBOMACHINE ET PROCÉDÉ DE FABRICATION DE L'ÉCHANGEUR**
GEGENSTROMWÄRMETAUSCHER FÜR EINE TURBOMASCHINE, TURBOMASCHINE UND VERFAHREN ZUR HERSTELLUNG DES WÄRMETAUSCHERS
COUNTERCURRENT HEAT EXCHANGER FOR A TURBOMACHINE, TURBOMACHINE, AND METHOD FOR MANUFACTURING THE EXCHANGER

(30) Priorité: 08.10.2020 FR 2010282
(43) Date de publication de la demande: 16.08.2023
(73) Titulaire: SAFRAN, 75015 Paris (FR)
(72) Inventeur: TOUBIANA, Ephraïm, 77550 Moissy-Cramayel (FR); DESARNAUD, Fabien, 77550 Moissy-Cramayel (FR); LAURENSAN, Frédéric, 77550 Moissy-Cramayel (FR)
(74) Mandataire: Cabinet Beau de Loménie
(86) Numéro de dépôt international: PCT/FR2021/051741
(87) Numéro de publication internationale: WO 2022/074339

(56) Documents cités:
- EP-A1- 3 073 219
- EP-A1- 3 486 595
- EP-A2- 1 898 069
- EP-A2- 1 916 399
- US-A1- 2019 024 989

## Description

### Domaine Technique

Le présent exposé concerne des échangeurs de chaleur gaz-gaz pour une turbomachine, en particulier un échangeur de chaleur en contre-courant.

### Technique antérieure

On connait un échangeur de chaleur gaz-gaz en contre-courant pour une turbomachine permettant de réchauffer le gaz de la veine primaire sortant du compresseur haute pression par le gaz de la veine primaire sortant de la turbine basse pression, permettant d'alimenter le système de contrôle environnemental de la cabine d'un aéronef, ou encore permettant de maintenir différents systèmes de l'aéronef dans leur plage de fonctionnement en température, par exemple pour assurer le respect de valeurs de tolérances mécaniques.
EP 1 898 069 A2 concerne un échangeur de chaleur de turbomachine.

Cependant, on cherche à augmenter l'efficacité, la fiabilité et/ou de réduire l'encombrement de ce type d'échangeur.

### Exposé de l'invention

Le présent exposé vise à remédier au moins en partie à ces inconvénients.

A cet effet, le présent exposé concerne un échangeur de chaleur en contre-courant pour turbomachine tel que défini en revendication 1, l'échangeur comprenant un premier et un deuxième circuit, le premier et le deuxième circuit étant respectivement configurés pour recevoir un premier flux de gaz et un deuxième flux de gaz, chaque
circuit comportant un collecteur secondaire d'entrée, une partie d'échange et un collecteur secondaire de sortie ; les parties d'échange du premier circuit et du deuxième circuit étant délimitées par des parois d'échange configurées pour diriger le premier et le deuxième flux de gaz selon une première direction ; et le collecteur secondaire d'entrée et le collecteur secondaire de sortie du premier circuit s'étendent selon une deuxième direction sensiblement perpendiculaire à la première direction, et débouchent sur une même face de l'échangeur.

Le premier circuit et/ou le deuxième circuit comporte/ comportent plus d'un collecteur secondaire d'entrée et/ou plus d'un collecteur secondaire de sortie.

Grâce à la structure de l'échangeur présentant un premier circuit avec des collecteurs secondaires d'entrée et de sortie débouchant sur une même face de l'échangeur, il est possible de réaliser un échangeur plus compact dont l'intégration dans une turbomachine est facilitée. Cela permet également de réduire une surface frontale de l'échangeur, ainsi qu'une longueur d'échange, et ainsi réduire la masse et l'encombrement de l'échangeur à un niveau performances donné.

Dans certains modes de réalisation, l'échangeur de chaleur présente des dimensions sensiblement équivalentes selon les trois dimensions de l'espace, ce qui permet de limiter les pertes de charge en réduisant la longueur des circuits ainsi qu'en réduisant les effets de bord. Cela permet également d'améliorer l'homogénéité de l'écoulement des flux de gaz, qui peut en outre être réalisé avec un nombre réduit d'étages d'échange entre les deux circuits, diminuant ainsi les risques de mauvaise distribution des gaz. Enfin, une répartition plus homogène des flux de gaz chaud et froid permet, à performance donnée, d'améliorer la tenue thermomécanique de l'échangeur.

On comprend que le premier et le deuxième flux de gaz étant dirigés selon une première direction, l'échangeur est un échangeur en contre-courant. On comprend également que le premier flux étant dirigé selon une première direction, le premier flux entre dans les parties d'échange par une première face et sort des parties d'échange par une deuxième face, opposée à la première face selon la première direction, les parties d'échanges étant prises en sandwich entre la première face et la deuxième face. Inversement, le deuxième flux entre par la deuxième face des parties d'échange et sort par la première face.

De plus, cette structure est particulièrement adaptée à la fabrication additive, par exemple par fusion sélective sur lit de poudre.

A titre d'exemple non limitatif, le premier circuit peut comporter au moins moins deux collecteurs secondaires d'entrée et au moins deux collecteurs secondaires de sortie.

Dansl'échangeur tel que défini en revendication 1, le collecteur secondaire d'entrée et le collecteur secondaire de sortie du premier circuit débouchent respectivement dans un collecteur principal d'entrée et un collecteur principal de sortie.

Ces collecteurs principaux d'entrée et de sortie permettent respectivement de distribuer le premier flux de gaz vers le collecteur secondaire d'entrée et de collecter le premier flux de gaz issu du collecteur secondaire de sortie.

Dansl'échangeur tel que défini en revendication 1, le premier circuit comprend au moins un deuxième collecteur secondaire d'entrée et/ou un deuxième collecteur secondaire de sortie, le collecteur principal correspondant parmi le collecteur principal d'entrée et le collecteur principal de sortie comprend un conduit primaire et au moins deux conduits auxiliaires se rejoignant dans le conduit primaire, chaque collecteur secondaire d'entrée et/ou chaque collecteur secondaire de sortie étant relié à un conduit auxiliaire.

Les collecteurs secondaires d'entrée ou de sortie multiples permettent un meilleur contrôle du premier flux de gaz dans le premier circuit, améliorant davantage l'homogénéité du flux et ainsi la tenue thermomécanique de l'échangeur.

Dans certains modes de réalisation, au moins un des collecteurs secondaires d'entrée et/ou de sortie du premier circuit peut présenter une section différente des autres collecteurs secondaires. Les collecteurs secondaires d'entrée ou de sortie peuvent également être disposés de sorte qu'au moins deux collecteurs secondaires adjacents présentent un espacement différent d'un espacement entre les autres collecteurs secondaires.

Le contrôle de l'espacement et des sections des collecteurs secondaires permet un contrôle supplémentaire de l'homogénéité de l'écoulement du flux dans l'échangeur et de la tenue thermomécanique de l'échangeur.

Dans certains modes de réalisation, le deuxième circuit comprend au moins un deuxième collecteur secondaire d'entrée et/ou un deuxième collecteur secondaire de sortie.

Les collecteurs secondaires d'entrée ou de sortie multiple permettent un meilleur contrôle du deuxième flux de gaz dans le deuxième circuit, améliorant davantage l'homogénéité du flux et ainsi la tenue thermomécanique de l'échangeur.

Dans certains modes de réalisation, le premier circuit comprend une pluralité de collecteurs secondaires d'entrée et une pluralité de collecteurs secondaires de sortie, configurés de sorte qu'au moins un collecteur secondaire d'entrée communique avec au moins deux collecteurs secondaires de sortie.

Cette structure permet d'optimiser la circulation du premier flux de gaz au sein du premier circuit.

Dans certains modes de réalisation, le deuxième circuit comprend une pluralité de collecteurs secondaires d'entrée et une pluralité de collecteurs secondaires de sortie, configurés de sorte qu'au moins un collecteur secondaire d'entrée communique avec au moins deux collecteurs secondaires de sortie.

Cette structure permet d'optimiser la circulation du deuxième flux de gaz au sein du deuxième circuit.

Dans certains modes de réalisation, le collecteur secondaire d'entrée et le collecteur secondaire de sortie du deuxième circuit sont respectivement configurés pour que les directions d'écoulement du deuxième flux de gaz en entrée et en sortie du deuxième circuit soient sensiblement selon la première direction.

Maintenir la direction d'écoulement du deuxième circuit sensiblement selon la première direction permet de réduire les pertes de charge du deuxième flux de gaz traversant l'échangeur.

Dans certains modes de réalisation, l'un au moins des collecteurs secondaires d'entrée et de sortie du deuxième circuit présente une section en forme de V dans une coupe selon un plan orthogonal à la deuxième direction.

Cette section en forme de V permet d'améliorer la distribution du deuxième flux de gaz dans la partie d'échange et la collection du deuxième flux de gaz de la partie d'échange tout en réduisant les pertes de charge.

Dans certains modes de réalisation, l'un au moins des collecteurs secondaires d'entrée et de sortie du premier circuit présente une section en forme de V dans une coupe selon un plan orthogonal à la deuxième direction.

Cette section en forme de V permet d'améliorer la distribution du premier flux de gaz dans la partie d'échange et la collection du premier flux de gaz de la partie d'échange tout en réduisant les pertes de charge.

Dans certains modes de réalisation, des parois de la section en forme de V présentent un angle avec la première direction inférieur à 45°, de préférence inférieur à 30°.

Un tel angle permet de limiter la déflexion du deuxième flux de gaz en entrée et en sortie des parois d'échange, et réduire les pertes de charge par rapport à des solutions connues présentant des angles proches de 90°.

Dans certains modes de réalisation, les parois d'échange comprennent des ailettes.

Les ailettes permettent d'augmenter la surface d'échange et ainsi améliorer les performances de l'échangeur. Les ailettes permettent en outre un meilleur contrôle des flux de gaz au sein des parties d'échange, et ainsi d'améliorer davantage la distribution des gaz. Les ailettes permettent également d'améliorer la tenue thermomécanique de l'échangeur dans le cas de flux de gaz à haute pression.

Le présent exposé concerne également un turboréacteur comprenant un échangeur tel que défini précédemment.

Dans certains modes de réalisations, le premier circuit est relié à un compresseur et le deuxième circuit est relié à une turbine.

Un turboréacteur équipé d'un tel échangeur présente l'avantage d'extraire de la chaleur des gaz dans la turbine (après combustion) pour la transmettre aux gaz dans le compresseur (avant combustion), et ainsi augmenter la température de combustion et donc l'efficacité thermique du turboréacteur.

Le présent exposé concerne également un procédé de fabrication d'un échangeur tel que défini précédemment, l'échangeur étant réalisé par un procédé de fabrication comprenant au moins une étape de fabrication additive sur lit de poudre.

L'échangeur de chaleur gaz-gaz étant réalisé par un procédé de fabrication additive, par exemple par un procédé de fusion laser sur lit de poudre, il est possible d'adapter la forme de l'échangeur de chaleur en contre-courant au volume et à la forme de l'espace disponible dans la turbomachine. En particulier, la structure d'un tel échangeur permet une conception par fabrication additive en limitant le recours à des parties de supportage. Ce procédé de fabrication présente en outre une mise en œuvre facilitée relativement aux procédés de fabrication traditionnels par brasage.

Dans le présent exposé, le terme « direction » est utilisé pour une droite non orientée, et le terme « sens » est utilisé pour définir une orientation ; les termes « entrée » et « sortie » sont utilisés relativement au sens de circulation du gaz ; on entend qu'un conduit ou un collecteur « s'étend » selon une direction lorsqu'il permet la circulation du gaz dans cette direction, indépendamment de la forme de la section et des dimensions dans d'autres directions.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 est une vue en coupe d'une turbomachine comprenant un échangeur de chaleur en contre-courant.
[Fig. 2] La figure 2 est une vue schématique en perspective d'un échangeur de chaleur en contre-courant.
[Fig. 3] La figure 3 est une vue schématique latérale d'un échangeur.
[Fig. 4] La figure 4 est une vue schématique en coupe selon le plan de coupe IV-IV de la figure 2.
[Fig. 5] La figure 5 est une vue en coupe selon le plan de coupe V-V de la figure 2.
[Fig. 6] La figure 6 est une vue schématique en coupe partielle, similaire à la figure 5, d'un second mode de réalisation d'un échangeur de chaleur en contre-courant.

### Description des modes de réalisation

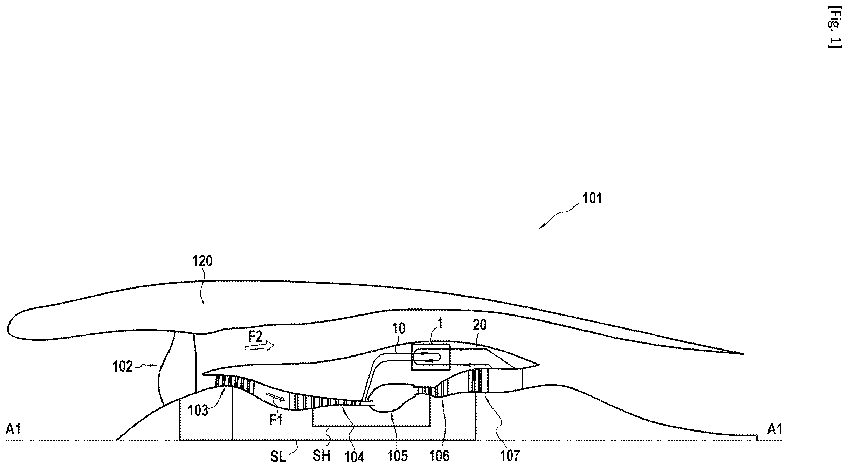

La FIG 1 représente, en demi-coupe selon un plan vertical passant par son axe principal A1-A1, une turbomachine 101 pourvue d'un échangeur de chaleur en contre-courant 1, ci-après désigné par « échangeur ».

La turbomachine 101 comprend, d'amont en aval selon la circulation du flux d'air, une soufflante 102, un compresseur basse pression 103 (également appelé « booster » en anglais), un compresseur haute pression 104, une chambre de combustion 105, une turbine haute pression 106, et une turbine basse pression 107. Ces différents éléments sont installés à l'intérieur d'une nacelle 120, de manière à obtenir un ensemble propulsif comprenant la nacelle 120 et la turbomachine 101.

En aval de la soufflante 102, le flux d'air est divisé en une première partie de flux d'air (aussi appelée flux primaire) F1 passant par le compresseur basse pression 103, et une deuxième partie de flux d'air (aussi appelée flux secondaire) F2 s'écoulant en dérivation autour du compresseur basse pression 103.

La soufflante 102 et le compresseur basse pression 103 sont entraînés par la turbine basse pression 107 via un arbre principal basse pression SL, tandis que le compresseur haute pression 104 est entraîné par la turbine haute pression 106 via un arbre principal haute pression SH. L'arbre principal basse pression SL s'étend typiquement à l'intérieur de l'arbre principal haute pression SH.

Comme mentionné ci-dessus, la turbomachine 101 est une turbomachine pourvue d'un échangeur 1. Comme illustré très schématiquement sur la FIG 1, un tel échangeur 1 est alimenté, via un conduit d'admission (non représenté), en air comprimé sortant du compresseur haute pression 104, ce flux formant un premier flux de gaz 10. Cet air comprimé est réchauffé au sein de l'échangeur 1 par les gaz chauds sortant de la turbine basse pression 107, formant un deuxième flux de gaz 20, puis est renvoyé en direction de la chambre de combustion 105 via un conduit de retour (non représenté). La présence de l'échangeur 1 a pour avantage de diminuer la consommation en carburant (et donc d'améliorer le rendement thermique) de la turbomachine 101, puisque l'air entrant dans la chambre de combustion 105 a déjà été préchauffé par les gaz chauds sortant de la turbine basse pression 107.

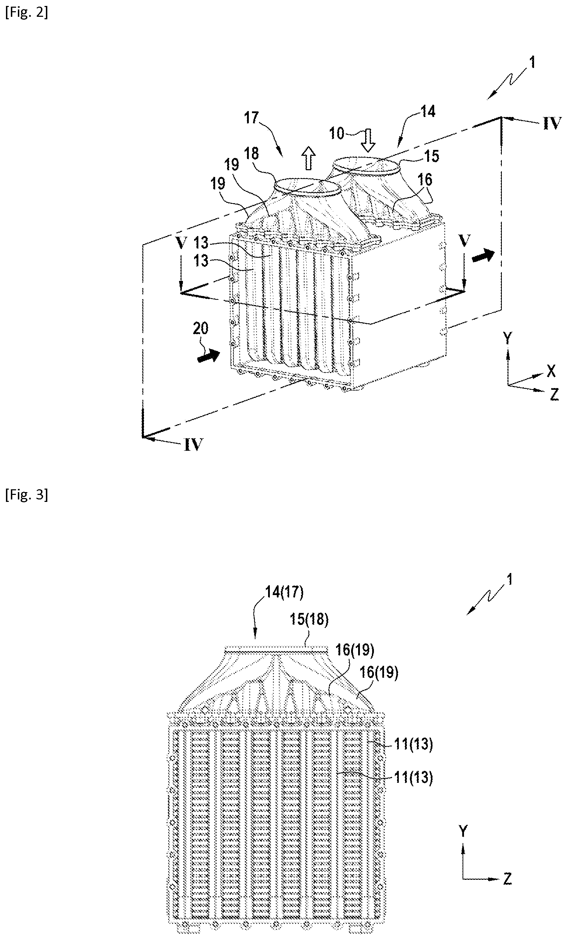

Dans un mode de réalisation, l'échangeur 1 peut par exemple avoir une forme sensiblement cubique ou de parallélépipède rectangle, comme représenté sur la figure 2. Dans le mode de réalisation des figures 2 à 6, l'échangeur 1 est représenté dans un repère orthonormé XYZ formé par la première direction X, la deuxième direction Y et la troisième direction Z.

Sur les figures 2 à 6, les flèches sans remplissage indiquent schématiquement la direction locale de circulation du premier flux de gaz 10 dans l'échangeur 1 et les flèches avec remplissage plein indiquent schématiquement la direction locale de circulation du deuxième flux de gaz 20 dans l'échangeur 1.

Par soucis de facilité de lecture, les références numériques des éléments présents en grand nombre (par exemple les conduits auxiliaires 16, 19) ne sont pas représentées pour chaque élément.

De façon générale, l'échangeur 1 comprend un premier circuit de gaz recevant le premier flux de gaz 10, et un deuxième circuit de gaz recevant le deuxième flux de gaz 20.

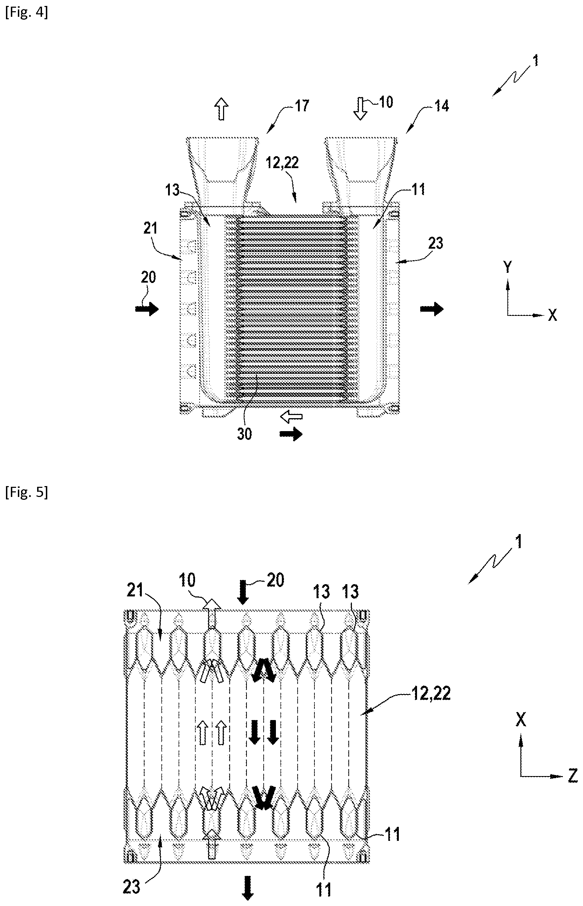

Les figures 3 et 4 représentent schématiquement deux vues de l'échangeur 1 selon deux directions perpendiculaires, la figure 4 présentant une vue en coupe selon le plan de coupe IV-IV de la figure 2.

Dans le mode de réalisation des figures 2 à 4, le premier circuit de gaz présente un collecteur principal d'entrée 14, plusieurs collecteurs secondaires d'entrée 11, une partie d'échange 12, plusieurs collecteurs secondaires de sortie 13 et un collecteur principal de sortie 17. Dans le premier circuit, le premier flux 10 entre dans l'échangeur 1 par le collecteur principal d'entrée 14, puis pénètre dans les collecteurs secondaires d'entrée 11 où le premier flux 10 est distribué dans les parties d'échange 12 du premier circuit. Le premier flux 10 est ensuite collecté dans les collecteurs secondaires de sortie 13 et sort de l'échangeur 1 par le collecteur principal de sortie 17.

Les collecteurs principaux d'entrée 14 et de sortie 17 permettent de limiter les pertes de charge en entrée et en sortie de l'échangeur 1.

Dans le mode de réalisation des figures 2 à 6 et comme représenté sur les figures 2 à 4, le deuxième circuit de gaz présente plusieurs collecteurs secondaires d'entrée 21, une partie d'échange 22 et plusieurs collecteurs secondaires de sortie 23. Le deuxième flux 20 entre dans l'échangeur 1 par les collecteurs secondaires d'entrée 21 où le deuxième flux 20 est distribué dans les parties d'échange 22 du deuxième circuit. Le deuxième flux 20 est ensuite collecté dans les collecteurs secondaires de sortie 23 et sort de l'échangeur 1.

Le premier et le deuxième circuit de gaz ne communiquent pas entre eux, de sorte que les flux de gaz 10, 20 ne se mélangent pas, mais des parois d'échange 30 disposées entre les parties d'échange 12, 22 du premier et du deuxième circuit favorisent les échanges thermiques entre les premier et deuxième flux de gaz 10, 20, et permettent de diriger les premier et deuxième flux de gaz 10, 20 selon la première direction X.

En particulier, l'échangeur 1 est un échangeur de chaleur en contre-courant 1, c'est-à-dire que dans les parties d'échange 12, 22 du premier et du deuxième circuit, les deux flux de gaz 10, 20 circulent sensiblement selon une même direction, mais avec des sens opposés.

Le deuxième circuit s'étend sensiblement selon la première direction X, de sorte que les directions d'écoulement du deuxième flux de gaz 20 en entrée et en sortie du deuxième circuit soient selon la première direction X.

Les collecteurs secondaires d'entrée 11 et de sortie 13 du premier circuit s'étendent selon la deuxième direction Y sensiblement perpendiculaire à la première direction X et débouchent sur une même face de l'échangeur 1. Les collecteurs secondaires d'entrée 11 et de sortie 13 du premier circuit, qui s'étendent selon la deuxième direction Y, sont par ailleurs reliés aux parties d'échange 12 du premier circuit, qui s'étendent selon la première direction X, et présentent ainsi chacun un coude.

Les coudes des collecteurs secondaires d'entrée 11 sont situés au niveau des connexions entre les conduits d'entrée 11 et les parties d'échange 12. Les coudes des collecteurs secondaires d'entrée 11 permettent de rediriger le flux entrant dans le premier circuit, selon la deuxième direction Y, vers les parties d'échange 12 du premier circuit, selon la première direction X.

Les coudes des collecteurs secondaires de sortie 13 sont situés au niveau des connexions entre les collecteurs secondaires de sortie 13 et les parties d'échange 12. Les coudes des collecteurs secondaires de sortie 13 permettent de rediriger le flux issu des parties d'échange 12 du premier circuit, selon la première direction X, vers la sortie du premier circuit au moyen des collecteurs secondaires de sortie 13 s'étendant sensiblement selon la deuxième direction Y.

En particulier, dans le mode de réalisation des figures 2 à 5, les collecteurs secondaires d'entrée 11 et de sortie 13 du premier circuit sont au nombre de sept. Toutefois, ce nombre est donné à titre d'exemple non limitatif. L'échangeur 1 peut présenter au moins un collecteur secondaire d'entrée 11, de préférence au moins deux collecteurs secondaires d'entrée 11. L'échangeur peut présenter au moins un collecteur secondaire de sortie 13, de préférence au moins deux collecteurs secondaires de sortie 13. On comprend que le premier circuit pourrait comprendre un nombre différent de collecteurs secondaires d'entrée 11 et de collecteurs secondaires de sortie 13. On notera également, à titre non limitatif, que les collecteurs secondaires d'entrée 11 et de sortie 13 du premier circuit présentent des sections dans un plan de coupe XZ, perpendiculaire à la deuxième direction Y, sensiblement constantes selon la deuxième direction Y, à l'exception des coudes.

On notera que les collecteurs secondaires d'entrée 11 et de sortie 13 présentent des sections dans un plan de coupe XZ, perpendiculaire à la deuxième direction Y, qui sont identiques et que les collecteurs secondaires d'entrée 11 et de sortie 13 sont espacés les uns des autres d'une même distance selon la troisième direction Z, perpendiculaire à la première direction X et à la deuxième direction Y. On comprend qu'au moins un des collecteurs secondaires d'entrée 11 et/ou de sortie 13 pourrait présenter une section différente. On comprend qu'au moins un des collecteurs secondaires d'entrée 11 et/ou de sortie 13 pourrait être espacé du conduit adjacent d'une distance différente de celle entre les autres conduits.

Dans le mode de réalisation des figures 2 à 5, les collecteurs secondaires d'entrée 21 et de sortie 23 du deuxième circuit sont au nombre de huit. Toutefois, ce nombre est donné à titre d'exemple non limitatif. L'échangeur 1 peut présenter au moins un collecteur secondaire d'entrée 21, de préférence au moins deux collecteurs secondaires d'entrée 21. L'échangeur 1 peut présenter au moins un collecteur secondaire de sortie 23, de préférence au moins deux collecteurs secondaires de sortie 23. On comprend que le deuxième circuit pourrait comprendre un nombre différent de collecteurs secondaires d'entrée 21 et de collecteurs secondaires de sortie 23.

On notera que les collecteurs secondaires d'entrée 21 et de sortie 23 du deuxième circuit aux extrémités de l'échangeur 1 ne présentent pas la même largeur selon la troisième direction Z que les collecteurs secondaires d'entrée 21 et de sortie 23 intermédiaires et que les collecteurs secondaires d'entrée 21 et de sortie 23 du deuxième circuit sont espacés les uns des autres d'une même distance selon la troisième direction Z.

Dans le mode de réalisation des figures 2 à 5, les collecteurs secondaires d'entrée 21 et de sortie 23 du deuxième circuit correspondent aux ouvertures formées respectivement entre les collecteurs secondaires de sortie 13 et les collecteurs secondaires d'entrée 11. On comprend que le deuxième circuit peut toutefois comprendre des collecteurs secondaires d'entrée 21 et de sortie 23 faisant saillie vers l'extérieur de l'échangeur.

Dans le mode de réalisation des figures 2 à 6 et comme représenté sur les figures 2 à 4, le collecteur principal d'entrée 14 comprend un conduit primaire d'entrée 15 et sept conduits auxiliaires d'entrée 16 se rejoignant dans le conduit primaire d'entrée 15. Le nombre de conduits auxiliaires d'entrée 16 correspond alors au nombre de collecteurs secondaires d'entrée 11, de sorte que chaque conduit d'entrée est reliée à un conduit auxiliaire d'entrée 16. Le nombre de conduits auxiliaires d'entrée 16 est donné à titre d'exemple non limitatif.

Dans le mode de réalisation des figures 2 à 6 et comme représenté sur les figures 2 à 4, le collecteur principal de sortie 17 comprend un conduit primaire de sortie 18 et sept conduits auxiliaires de sortie 19 se rejoignant dans le conduit primaire de sortie 18. Le nombre de conduits auxiliaires de sortie 19 correspond alors au nombre de collecteurs secondaires de sortie 13, de sorte que chaque collecteur secondaires de sortie 13 est relié à un conduit auxiliaire de sortie 19. Le nombre de conduits auxiliaires de sortie 19 est donné à titre d'exemple non limitatif.

On comprendra que les conduits auxiliaires 16, 19 peuvent être mis en œuvre indépendamment sur le collecteur principal d'entrée 14 et/ou le collecteur principal de sortie 17.

On comprendra en outre que si le deuxième circuit n'est pas représenté avec un collecteur principal, un tel mode de réalisation n'est pas exclu, tout conduit relié au deuxième circuit ayant alors la fonction de collecteur principal.

La figure 5 est une vue en coupe selon le plan de coupe V-V de la figure 2.

Les traits pointillés représentent schématiquement l'extension des parties d'échange 12, 22 sensiblement selon la première direction X vu dans le plan de coupe V-V, et des exemples de parcours de flux de gaz 10, 20 correspondants ont été représentés.

En particulier, il est compris que les parois d'échange 30 délimitant les parties d'échange 12, 22 peuvent former un maillage dense et/ou présenter des ailettes ou n'importe quelle structure connue de l'homme de métier permettant d'augmenter la surface d'échange et assurer le contrôle des flux de gaz dans les parties d'échange 12, 22.

Il convient de noter que les représentations des flux sont des projections dans le plan de la figure 5 à des fins explicatives. En particulier, le premier flux de gaz 10 est représenté comme entrant et sortant dans la première direction X, mais dans le mode de réalisation décrit à la figure 5, le premier flux de gaz 10 entre et sort du premier circuit selon la deuxième direction Y perpendiculaire à la direction du plan XZ.

Dans le plan de coupe de la figure 5, c'est-à-dire un plan normal à la deuxième direction Y et passant par l'échangeur 1 et qui est donc parallèle au plan de la figure 5, les collecteurs secondaires d'entrée 11 et de sortie 13 du premier circuit présentent une section en forme de V, et les collecteurs secondaires d'entrée 21 et de sortie 23 du deuxième circuit présentent une section en forme de V. Les collecteurs secondaires d'entrée 11 du premier circuit et les conduits de sortie 23 du deuxième circuit forment alors une structure en forme de W. De la même façon, les collecteurs secondaires d'entrée 21 du deuxième circuit et les collecteurs secondaires de sortie 13 du premier circuit forment une structure en forme de W.

En particulier, les parois de la section en forme de V présentent un angle avec la première direction X inférieur à 45°, de préférence inférieur à 30°.

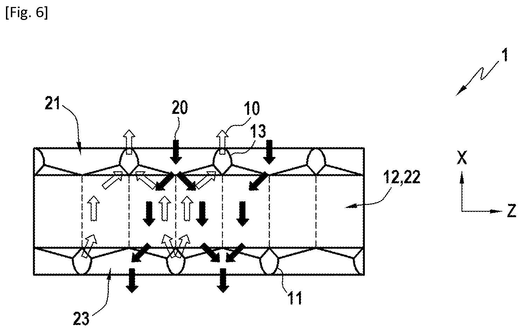

La figure 6 représente un deuxième mode de réalisation, qui est une variation du premier mode de réalisation présenté sur la figure 5. La figure 6 est une vue en coupe similaire à la vue en coupe de la figure 5. A cet effet, la figure 6 est une vue schématique représentant une modification du mode de réalisation de la figure 5, dans laquelle les traits pointillés représentent schématiquement l'extension des parties d'échange 12, 22 sensiblement selon la direction X vu dans le plan de coupe V-V. Ce deuxième mode de réalisation est similaire au premier mode de réalisation.

Dans le mode de réalisation de la figure 6, les collecteurs secondaires d'entrée 11 et de sortie 13 du premier circuit sont positionnés en quinconce, c'est-à-dire que les collecteurs secondaires d'entrée 11 et de sortie 13 du premier circuit ne sont plus sensiblement alignés selon la première direction X. Cependant, le premier flux 10 est dirigé selon la première direction X.

De plus, les collecteurs secondaires d'entrée 21 et de sortie 23 du deuxième circuit sont positionnés en quinconce, c'est-à-dire que les collecteurs secondaires d'entrée 21 et de sortie 23 du deuxième circuit ne sont plus sensiblement alignés selon la première direction X. Cependant, le deuxième flux 20 est dirigé selon la première direction X.

Ainsi, dans une vue selon le plan de la figure 6, normal à la deuxième direction Y, un collecteur secondaire d'entrée 11 du premier circuit est aligné selon la première direction X avec un collecteur secondaire d'entrée 21 du deuxième circuit , et réciproquement un collecteur secondaire de sortie 23 du deuxième circuit est aligné selon la première direction X avec un collecteur secondaire de sortie 13 du premier circuit.

Comme représenté par les exemples de circulation de flux de gaz de la figure 6, une telle structure en quinconce permet de connecter un collecteurs secondaires d'entrée 11 du premier circuit avec au moins deux collecteurs secondaires de sortie 13 du premier circuit et de diviser le flux en deux tout en limitant les pertes de charge. De manière similaire, la structure en quinconce permet de connecter un collecteur secondaire d'entrée 21 du deuxième circuit avec au moins deux collecteurs secondaires de sortie 23 du deuxième circuit et de diviser le flux en deux tout en limitant les pertes de charge.

La structure en quinconce permet également de connecter un collecteur secondaire de sortie 13 du premier circuit avec au moins deux collecteurs secondaires d'entrée 11 du premier circuit et de collecter le flux issu de deux collecteurs secondaires d'entrée 11 tout en limitant les pertes de charge. De manière similaire, la structure en quinconce permet également de connecter un conduit de sortie 23 du deuxième circuit avec au moins deux conduits d'entrée du deuxième circuit et de collecter le flux issu de deux collecteurs secondaires d'entrée 21 tout en limitant les pertes de charge.

L'échangeur 1 présente une structure qui est particulièrement adaptée à une réalisation par procédé de fabrication additive. Un procédé de fabrication de l'échangeur 1 peut alors être mis en œuvre, entièrement ou partiellement, par fabrication additive, par exemple par un procédé de fusion laser sur lit de poudre.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Echangeur de chaleur (1) en contre-courant pour turbomachine comprenant :
un premier et un deuxième circuit, le premier et le deuxième circuit étant respectivement configurés pour recevoir un premier flux de gaz (10) et un deuxième flux de gaz (20), chaque circuit comportant un collecteur secondaire d'entrée (11,21), une partie d'échange (12,22) et un collecteur secondaire de sortie (13,23), les parties d'échange (12,22) du premier circuit et du deuxième circuit étant délimitées par des parois d'échange (30) configurées pour diriger le premier (10) et le deuxième flux de gaz (20) selon une première direction (X); et
le collecteur secondaire d'entrée (11) et le collecteur secondaire de sortie (13) du premier circuit s'étendent selon une deuxième direction (Y) sensiblement perpendiculaire à la première direction (X), et débouchent sur une même face de l'échangeur (1),
le collecteur secondaire d'entrée (11) et le collecteur secondaire de sortie (13) du premier circuit débouchent respectivement dans un collecteur principal d'entrée (14) et un collecteur principal de sortie (17),
l'échangeur étant **caractérisé en ce qu'**il comprend au moins un deuxième collecteur secondaire d'entrée (11) et/ou un deuxième collecteur secondaire de sortie (13), le collecteur principal correspondant parmi le collecteur principal d'entrée (14) et le collecteur principal de sortie (17) comprend un conduit primaire (15,18) et au moins deux conduits auxiliaires (16,19) se rejoignant dans le conduit primaire (15,18), et
chaque collecteur secondaire d'entrée (11) et/ou chaque collecteur secondaire de sortie (13) étant relié à un conduit auxiliaire (16,19).

2. Echangeur de chaleur (1) selon la revendication 1, dans lequel le premier circuit comprend une pluralité de collecteurs secondaires d'entrée (11) et une pluralité de collecteurs secondaires de sortie (13), configurés de sorte qu'au moins un collecteur secondaire d'entrée (11) communique avec au moins deux collecteurs secondaires de sortie (13).

3. Echangeur de chaleur (1) selon la revendication 1 ou 2, dans lequel le collecteur secondaire d'entrée (21) et le collecteur secondaire de sortie (23) du deuxième circuit sont respectivement configurés pour que les directions d'écoulement du deuxième flux de gaz en entrée et en sortie du deuxième circuit soient sensiblement selon la première direction (X).

4. Echangeur de chaleur (1) selon la revendication 3, dans lequel l'un au moins des collecteurs secondaires d'entrée (21) et de sortie (23) du deuxième circuit présente une section en forme de V dans une coupe selon un plan (XZ) orthogonal à la deuxième direction (Y).

5. Echangeur de chaleur (1) selon la revendication 4, dans lequel des parois de la section en forme de V présentent un angle avec la première direction inférieur à 45°, de préférence inférieur à 30°.

6. Turbomachine (101) comprenant un échangeur de chaleur (1) selon l'une quelconque des revendications 1 à 5.

7. Turbomachine (101) selon la revendication 6, dans laquelle le premier circuit est relié à un compresseur (104) et le deuxième circuit est relié à une turbine (107).

8. Procédé de fabrication d'un échangeur de chaleur (1) selon l'une quelconque des revendications 1 à 5, comprenant au moins une étape de fabrication additive sur lit de poudre.

## Patentansprüche

1. Gegenstromwärmetauscher (1) für Turbomaschine, umfassend:
einen ersten und einen zweiten Kreislauf, wobei der erste und der zweite Kreislauf jeweils konfiguriert sind, um einen ersten Gasstrom (10) und einen zweiten Gasstrom (20) aufzunehmen, wobei jeder Kreislauf einen sekundären Einlassverteiler (11, 21), einen Tauscherabschnitt (12, 22) und einen sekundären Auslassverteiler (13, 23) umfasst, wobei die Tauscherabschnitte (12, 22) des ersten Kreislaufs und des zweiten Kreislaufs durch Tauscherwände (30) begrenzt sind, die konfiguriert sind, um den ersten (10) und den zweiten Gasstrom (20) in eine erste Richtung (X) zu lenken; und wobei sich der sekundäre Einlassverteiler (11) und der sekundäre Auslassverteiler (13) des ersten Kreislaufs in einer zweiten Richtung (Y), die im Wesentlichen senkrecht zur ersten Richtung (X) verläuft, erstrecken, und auf dieselbe Seite des Tauschers (1) münden,
und wobei der sekundäre Einlassverteiler (11) und der sekundäre Auslassverteiler (13) des ersten Kreislaufs jeweils in einen Haupteinlassverteiler (14) und einen Hauptauslassverteiler (17) münden, wobei der Wärmetauscher **dadurch gekennzeichnet ist, dass** er mindestens einen zweiten sekundären Einlassverteiler (11) und/oder einen zweiten sekundären Auslassverteiler (13) umfasst, der entsprechende Hauptverteiler aus dem Haupteinlassverteiler (14) und dem Hauptauslassverteiler (17) eine Hauptleitung (15, 18) und mindestens zwei Hilfsleitungen (16, 19) umfasst, die sich in der Hauptleitung (15, 18) treffen,
wobei jeder sekundäre Einlassverteiler (11) und/oder jeder sekundäre Auslassverteiler (13) mit einer Hilfsleitung (16, 19) verbunden ist.

2. Wärmetauscher (1) nach Anspruch 1, wobei der erste Kreislauf eine Vielzahl von sekundären Einlassverteilern (11) und eine Vielzahl von sekundären Auslassverteilern (13) umfasst, die so konfiguriert sind, dass mindestens ein sekundärer Einlassverteiler (11) mit mindestens zwei sekundären Auslassverteilern (13) kommuniziert.

3. Wärmetauscher (1) nach Anspruch 1 oder 2, wobei der sekundäre Einlassverteiler (21) und der sekundäre Auslassverteiler (23) des zweiten Kreislaufs jeweils so konfiguriert sind, dass die Strömungsrichtungen des zweiten Gasstroms am Einlass und am Auslass des zweiten Kreislaufs im Wesentlichen entlang der ersten Richtung (X) verlaufen.

4. Wärmetauscher (1) nach Anspruch 3, wobei mindestens einer der sekundären Einlass- (21) und Auslassverteiler (23) des zweiten Kreislaufs einen V-förmigen Querschnitt in einem Schnitt in einer Ebene (XZ) aufweist, die orthogonal zur zweiten Richtung (Y) verläuft.

5. Wärmetauscher (1) nach Anspruch 4, wobei die Wände des V-förmigen Querschnitts einen Winkel zur ersten Richtung aufweisen, der kleiner als 45°, vorzugsweise kleiner als 30° ist.

6. Turbomaschine (101), umfassend einen Wärmetauscher (1) nach einem der Ansprüche 1 bis 5.

7. Turbomaschine (101) nach Anspruch 6, wobei der erste Kreislauf mit einem Kompressor (104) verbunden ist und der zweite Kreislauf mit einer Turbine (107) verbunden ist.

8. Verfahren zur Herstellung eines Wärmetauschers (1) nach einem der Ansprüche 1 bis 5, umfassend mindestens einen Schritt des additiven Herstellens auf Pulverbett.

## Claims

1. A counter-current heat exchanger (1) for a turbomachine comprising:
a first and second circuit, the first and the second circuit being respectively configured to receive a first gas flow (10) and a second gas flow (20), each circuit including a secondary inlet manifold (11,21), an exchanging part (12,22) and a secondary outlet manifold (13,23),
the exchanging parts (12,22) of the first circuit and of the second circuit being delimited by exchange walls (30) configured to direct the first (10) and the second gas flow (20) along a first direction (X); and
the secondary inlet manifold (11) and the secondary outlet manifold (13) of the first circuit extend along a second direction (Y) substantially perpendicular to the first direction (X), and open onto a same face of the exchanger (1),
the secondary inlet manifold (11) and the secondary outlet manifold (13) of the first circuit respectively open into a main inlet manifold (14) and a main outlet manifold (17),
the heat exchanger being **characterized in that** it comprises at least a second secondary inlet manifold (11) and/or a second secondary outlet manifold (13), the main corresponding manifold among the main inlet manifold (14) and the main outlet manifold (17) comprises a primary duct (15,18) and at least two auxiliary ducts (16,19) meeting in the primary duct (15,18), and
each secondary inlet manifold (11) and/or each secondary outlet manifold (13) being connected to an auxiliary duct (16,19).

2. The heat exchanger (1) as claimed in claim 1, wherein the first circuit comprises a plurality of secondary inlet manifolds (11) and a plurality of secondary outlet manifolds (13), configured such that at least one secondary inlet manifold (11) communicates with at least two secondary outlet manifolds (13).

3. The heat exchanger (1) as claimed in claim 1 or 2, wherein the secondary inlet manifold (21) and the secondary outlet manifold (23) of the second circuit are respectively configured so that the directions of flow of the second gas flow at the inlet and the outlet of the second circuit are substantially along the first direction (X).

4. The heat exchanger (1) as claimed in claim 3, wherein the at least one secondary inlet (21) and outlet (23) manifolds of the second circuit has a V-shaped section in a section along a plane (XZ) orthogonal to the second direction (Y).

5. The heat exchanger (1) as claimed in claim 4, wherein walls of the V-shaped section have an angle with the first direction less than 45°, preferably less than 30°.

6. A turbomachine (101) comprising a heat exchanger (1) as claimed in any of claims 1 to 5.

7. The turbomachine (101) as claimed in claim 6, wherein the first circuit is connected to a compressor (104) and the second circuit is connected to a turbine (107).

8. A method for manufacturing a heat exchanger (1) as claimed in any of claims 1 to 5, comprising at least one powder bed additive manufacturing step.
